# EUROPÄISCHE PATENTSCHRIFT

(11) **EP 0 798 098 B1**
(45) Veröffentlichungstag und Bekanntmachung des Hinweises auf die Patenterteilung: **24.03.1999**
(21) Anmeldenummer: 96119496.6
(22) Anmeldetag: 05.12.1996
(51) Int. Cl.: B29C 47/68

(54) **Vorrichtung zum Filtrieren eines Fluids**
Device for filtering plastic melts
Dispositif de filtrage pour matières plastiques fondues

(30) Priorität: 29.03.1996 DE 19612790
(43) Veröffentlichungstag der Anmeldung: 01.10.1997
(73) Patentinhaber: WIL-MAN POLYMER-FILTRATION GmbH, 48493 Wettringen (DE)
(72) Erfinder: Hangmann, Manfred, 48268 Greven (DE)
(74) Vertreter: Lau-Loskill, Philipp, Dipl.-Phys.

(56) Entgegenhaltungen:
- EP-A- 0 707 878
- DE-A-19 519 907
- DE-C- 4 012 404
- US-A- 4 814 186

## Beschreibung

Die vorliegende Erfindung betrifft eine Vorrichtung zum Filtrieren eines Fluids mit den Merkmalen des Oberbegriffs des Patentanspruchs 1.

Um Fluida, insbesondere um verflüssigte Kunststoffe, von unerwünschten und die weitere Verarbeitung störenden Fremdpartikeln zu befreien, ist es bekannt, daß derartige Fluida durch entsprechende, mit Filtern versehene Vorrichtungen geführt wird. So wird beispielsweise in der Kunststoffverarbeitung der verflüssigte Kunststoff durch eine derartige Filtervorrichtung strömen gelassen, wobei diese Filtervorrichtung in der Regel derart im Strömungsweg positioniert ist, daß sie in Strömungsrichtung des zu filtrierenden Kunststoffes gesehen stromab des Extruders vor dem jeweiligen Werkzeug oder einer Düse angeordnet ist.

Eine Filtervorrichtung mit den Merkmalen des Oberbegriffs des Patentanspruchs 1 ist aus der DE 35 27 173 bekannt. Hierbei weist die bekannte Filtervorrichtung zum Filtrieren von geschmolzenem Kunststoff in Strömungsrichtung des Kunststoffes gesehen stromab des Extruders einen Fluidzufuhrkanal auf, wobei von dem Fluidzufuhrkanal vier Verbindungskanäle abzweigen. In jedem Verbindungskanal ist ein plattenartiges und sich quer zur Strömungsrichtung des zu filtrierenden Kunststoffes erstreckendes Filter angeordnet. Stromab der plattenartigen Filter vereinigen sich die vier Verbindungskanäle zu einem Fluidabfuhrkanal.

Bedingt dadurch, daß bei der bekannten Filtereinrichtung jeweils zwei Filter paarweise und bewegbar angeordnet sind, erlaubt die bekannte Filtervorrichtung zur Reinigung der Filter während des Betriebes ein Austausch jeweils eines Filterpaares. Hierzu ist es erforderlich, daß das jeweils auszutauschende Filterpaar aus dem Gehäuse herausgeführt wird, wobei zu diesem Zeitpunkt dann der Fluidstrom in den diesen beiden Filtern zugeordneten zwei Verbindungskanälen unterbrochen wird, so daß das verbleibende Filterpaar den hierdurch passierenden Kunststoffstrom filtriert und somit die Produktion aufrechterhält.

Die bekannte Vorrichtung weist jedoch den Nachteil auf, daß insbesondere bei stark verschmutzten Kunststoffen, wie beispielsweise Recyclingkunststoffe, ein häufiges Auswechseln der plattenartigen Filterpaare innerhalb von nur wenigen Minuten erforderlich ist, was einen erheblichen Personalbedarf beinhaltet.

Der vorliegenden Erfindung liegt die Aufgabe zugrunde, eine Vorrichtung zum Filtrieren der angegebenen Art zur Verfügung zu stellen, die besonders einfach und mit wenig Personalaufwand betreibbar ist.

Diese Aufgabe wird erfindungsgemäß durch eine Filtriervorrichtung mit den kennzeichnenden Merkmalen des Patentanspruchs 1 gelöst.

Die erfindungsgemäße Vorrichtung zum Filtrieren eines Fluids, insbesondere eines verflüssigten Kunststoffes, weist, wie der vorstehend aufgeführte Stand der Technik, einen Fluidzufuhrkanal und einen Fluidabfuhrkanal auf. Hierbei wird jedoch abweichend zu der zuvor beschriebenen bekannten Vorrichtung bei der erfindungsgemäßen Vorrichtung der Fluidzufuhrkanal mit dem Fluidabfuhrkanal nur durch einen einzigen Verbindungskanal verbunden, wobei der einzige Verbindungskanal eine trichterförmige Ausweitung zur Aufnahme von mindestens zwei, im Wesentlichen quer zur Strömungsrichtung des zu filtrierenden Fluids im Verbindungskanal ausgerichtete plattenartige Filter besitzt. Desweiteren sind die mindestens zwei Filter gleichzeitig zwischen einer ersten Stellung, in der die mindestens zwei Filter das Fluid filtrieren, und einer zweiten Stellung, in der mindestens ein Filter der mindestens zwei Filter entgegengesetzt zur Strömungsrichtung des Fluids im Verbindungskanal beim Filtrieren durchströmt wird, bewegbar, während zu diesem Zeitpunkt das andere Filter bzw. die anderen Filter das zu filtrierende Fluid filtriert bzw. filtrieren, wobei in der zweiten Stellung der mindestens zwei Filter Fluid aus der Vorrichtung zur Atmosphäre hin abführbar ist.

Die erfindungsgemäße Vorrichtung weist eine Reihe von Vorteilen auf. So ist zunächst festzuhalten, daß der für den Betrieb der erfindungsgemäßen Vorrichtung erforderliche Personalaufwand im Vergleich zur eingangs beschriebenen Vorrichtung erheblich reduziert ist, was damit zusammenhängt, daß die Standzeit der plattenartigen Filter im Betrieb der erfindungsgemäßen Vorrichtung vervielfacht ist, so daß bei der erfindungsgemäßen Vorrichtung ein Austausch von Filtern relativ selten und in wesentlich größeren Zeiträumen auftritt. Dies hängt damit zusammen, daß in der zweiten Stellung der mindestens zwei Filter mindestens ein Filter entgegengesetzt zur eigentlichen Strömungsrichtung des Fluids beim Filtrieren durchströmt wird, was dazu führt, daß die auf den zum Fluidzufuhrkanal gerichteten Filterflächen abgeschiedenen Partikel in dieser zweiten Stellung der mindestens zwei Filter zur Atmosphäre hin abgeführt werden, was nachfolgend auch kurz als Rückspülen oder Regenerieren bezeichnet ist. Dieser Rückspülvorgang läßt sich bei der erfindungsgemäßen Vorrichtung automatisieren, so daß das Bedienungspersonal allenfalls diesen Rückspülvorgang kontrollieren muß, ohne selbst zur Auswechselung der Filter tätig zu werden.

Weiterhin hat sich gezeigt, daß die erfindungsgemäße Vorrichtung im Vergleich zur herkömmlichen Vorrichtung wesentlich einfacher herstellbar ist, da hierbei lediglich ein einziger Verbindungskanal, der seinerseits mit dem Fluidzufuhrkanal und dem Fluidabfuhrkanal fluchtet, hergestellt werden muß, während bei der bekannten Vorrichtung vier, speziell geformte Teilkanäle notwendig sind, wobei alle vier Teilkanäle jeweils mit dem Fluidzufuhrkanal und dem Fluidabfuhrkanal so fluchten müssen, daß hier keine Kanten oder Ecken entstehen, die ihrerseits eine unerwünschte Verwirbelung des Fluids und somit ein unterschiedliches Durchströmen und damit auch eine unterschiedliche Durchflußmenge pro Zeiteinheit an Fluid in einzelnen Teilkanälen bewirken. Bedingt dadurch, daß die erfindungsgemäße Vorrichtung nur einen einzigen, mit einer entsprechenden trichterförmigen Aufweitung versehenen Verbindungskanal besitzt, ist der Querschnitt dieses einzigen Verbindungskanals verglichen mit dem Querschnitt eines bei der bekannten Vorrichtung vorgesehenen Teilkanales wesentlich größer, so daß der bei der erfindungsgemäßen Vorrichtung angeordnete einzige Verbindungskanal nicht durch Schmutzpartikel, gecracktem Kunststoff oder erstarrtem Kunststoff verstopfen kann, wodurch einerseits die Betriebssicherheit der erfindungsgemäßen Vorrichtung im Vergleich zur bekannten Vorrichtung erhöht ist und wodurch andererseits bei der erfindungsgemäßen Vorrichtung ein besonders störunanfälliger Betrieb ermöglicht wird.

Neben den zuvor beschriebenen beiden Stellungen, zwischen denen die mindestens zwei Filter bewegbar sind, können die mindestens zwei Filter desweiteren noch eine Stellung einnehmen, in der sie sich außerhalb der Vorrichtung befinden, so daß sie dementsprechend austauschbar sind und durch neue Filter ersetzt werden können.

Eine Weiterbildung der zuvor beschriebenen erfindungsgemäßen Vorrichtung weist einen einzigen Verbindungskanal auf, in dem nur zwei Filter angeordnet sind. Hierbei können diese beiden Filter zwischen der zuvor beschriebenen ersten Stellung und der ebenfalls zuvor genannten zweiten Stellung bewegt werden, derart, daß wahlweise beide Filter gleichzeitig das Fluid filtrieren (erste Stellung) oder daß das erste Filter das Fluid filtriert, während das zweite Filter zu diesem Zeitpunkt vom filtrierten Fluid entgegengesetzt zur Strömungsrichtung beim Filtrieren durchströmt wird, so daß das zweite Filter dabei regeneriert wird. Sobald das zweite Filter dann regeneriert ist und eine Regenerierung des ersten Filters erforderlich ist, wird das zweite Filter zum Filtrieren des Fluids verwendet, während das erste Filter dann mit filtriertem Fluid entgegengesetzt zur Strömungsrichtung beim Filtrieren durchströmt wird, um so auch das erste Filter zu regenerieren.

Bezüglich der Ausrichtung des größeren Durchmessers der trichterförmigen Ausweitung im Verbindungskanal bestehen zwei Möglichkeiten. So kann der größere Durchmesser der trichterförmigen Ausweitung des Verbindungskanals zum Fluidabfuhrkanal hin weisen, wobei es sich jedoch aus strömungstechnischen Gründen als besonders vorteilhaft herausgestellt hat, wenn der Verbindungskanal derart zwischen dem Fluidzufuhrkanal und dem Fluidabfuhrkanal angeordnet ist, daß der größere Durchmesser der trichterförmigen Ausweitung des Verbindungskanals zum Fluidzufuhrkanal hin weist, wie dies nachfolgend noch bei den konkreten Ausführungsformen der erfindungsgemäßen Vorrichtung gezeigt und beschrieben ist.

Um die gewünschte Bewegung der mindestens zwei Filter aus der ersten Stellung in die zweite Stellung und umgekehrt hierzu herbeiführen, können die mindestens zwei Filter drehbar in der trichterförmigen Ausweitung des Verbindungskanals derart gelagert sein, daß sich die Drehachse im Wesentlichen in Richtung des Strömungsweges des zu filtrierenden Fluids erstreckt. Besonders geeignet ist es jedoch, wenn die mindestens zwei Filter quer zur Strömungsrichtung des zu filtrierenden Fluids verschiebbar gelagert sind, wobei eine derartige verschiebbare Lagerung der mindestens zwei Filter mit relativ einfachen Mitteln pneumatisch und insbesondere hydraulisch herbeigeführt werden kann.

Eine besonders geeignete und somit bevorzugte Ausführungsform der erfindungsgemäßen Vorrichtung sieht vor, daß der Verbindungskanal in einem zylindrischen Bolzen angeordnet ist, wobei der Bolzen fluiddicht in einer Gehäusebohrung, die sich senkrecht durch den Strömungsweg des zu filtrierenden Fluids vom Fluidzufuhrkanal zum Fluidabfuhrkanal erstreckt, gehaltert ist. Hierbei erstreckt sich der Verbindungskanal über den gesamten Durchmesser des Bolzens, wobei der Bolzen innerhalb der Gehäusebohrung quer zur Strömungsrichtung des zu filtrierenden Fluids derart verschiebbar ist, daß die mindestens zwei Filter durch eine Verschiebung des Bolzens von der ersten in die zweite Stellung und umgekehrt hierzu bringbar sind. Somit erlaubt diese Ausführungsform der erfindungsgemäßen Vorrichtung durch eine axiale Verschiebung des Bolzens in der Gehäusebohrung in einfacher Weise, daß entweder die mindestens zwei Filter in die erste Stellung, in der sie beide gleichzeitig vom zu filtrierenden Fluid durchströmt werden, oder in die zweite Stellung, in der mindestens ein Filter der mindestens zwei Filter rückspülbar ist, während das mindestens eine andere Filter filtriert, oder in eine weitere Stellung, in der die Filter auswechselbar sind, bringbar sind.

Um bei der erfindungsgemäßen Vorrichtung in der zweiten Stellung der mindestens zwei Filter (Regenerierstellung) ein ordnungsgemäßes Abführen des mit von der Filterfläche abgelösten Schmutzpartikeln versetzten Fluids zur Atmosphäre hin zu ermöglichen, sieht eine Weiterbildung der zuvor beschriebenen Ausführungsform der erfindungsgemäßen Vorrichtung vor, daß mindestens ein Abflußkanal zur Abführung des Fluids aus der Vorrichtung vorgesehen ist, wobei der mindestens eine Abflußkanal einen stromauf des mindestens einen Filters vorgesehenen Bereich des Verbindungskanals mit der Atmosphäre hin verbindet. Mit anderen Worten ist hierbei ein Bereich des Verbindungskanals, der zwischen dem Fluidzufuhrkanal und dem Filter vorhanden ist, über diesen Abflußkanal mit der Atmosphäre hin verbunden.

Um bei der zuvor beschriebenen Weiterbildung der erfindungsgemäßen Vorrichtung die Länge des mindestens Abflußkanales zu verringern, ist insbesondere jedem Filter ein Abflußkanal zugeordnet.

Bezüglich der Anordnung dieses Abflußkanales bestehen mehrere Möglichkeiten. So kann beispielsweise der Abflußkanal innerhalb des Bolzens, der den Verbindungskanal und die darin angeordneten mindestens zwei Filter aufweist, angeordnet ist, so daß bei einer axialen Verschiebung des Bolzens in die zweite Stellung die Auslaßöffnung dieses Abflußkanales dann zur Atmosphäre hin geöffnet ist.

Die zweite Möglichkeit der Ausgestaltung des Abflußkanales sieht vor, daß der Abflußkanal im Gehäusebereich der Vorrichtung zugeordnet ist, in dem auch der Fluidzufuhrkanal angeordnet ist. Sind bei dieser Ausführungsform der Verbindungskanal und die darin angeordneten mindestens zwei Filter in dem zuvor beschriebenen Bolzen positioniert, so kann durch eine axiale Verschiebung des Bolzens relativ zu seiner Bohrung der stromauf des jeweiligen Filters vorgesehene Bereich des Verbindungskanals mit dem Abflußkanal verbunden werden, so daß dementsprechend in dieser Regenerierstellung das mit von der Filterfläche abgelösten Schmutzpartikeln versetzte Fluid zur Atmosphäre hin abgeführt wird. Ebenso ist es möglich, den Abflußkanal seinerseits mit einem entsprechenden Absperrventil zu versehen, derart, daß nur in der Regenerierstellung (zweite Stellung) der stromauf des jeweils zu reinigenden Filters vorgesehene Bereich mit der Atmosphäre hin verbunden ist.

Bei der dritten Möglichkeit ist der Abflußkanal außen an dem Gehäusebereich vorgesehen, in dem der Fluidzufuhrkanal angeordnet ist, wie dies nachfolgend noch anhand einer konkreten Ausführungsform im Detail beschrieben ist.

Eine besonders vorteilhafte Weiterbildung der zuvor beschriebenen Ausführungsformen der erfindungsgemäßen Vorrichtung sieht vor, daß die mindestens zwei Filter zusätzlich noch in eine dritte Stellung bringbar sind, in der ein stromauf der Filter vorgesehener Bereich des Verbindungskanals, d.h. somit ein Bereich des Verbindungskanals, der zwischen dem Fluidzufuhrkanal und den Filter angeordnet ist, mit einem zur Atmosphäre hin zu öffnenden Spülkanal verbindbar ist. Dieser Spülkanal bewirkt, daß das Fluid aus der Vorrichtung abgeführt werden kann, ohne daß es in Kontakt mit den Filtern tritt. Eine derartige dritte Stellung ist immer dann besonders erwünscht, wenn zu Beginn der Produktion mit Rückständen versetztes und stark verschmutztes Fluid aus der Vorrichtung abgeführt werden muß, so daß nicht direkt zu Beginn schon die Filter extrem stark mit Schmutzpartikeln beaufschlagt werden.

Werden bei der zuvor beschriebenen Ausführungsform der erfindungsgemäßen Vorrichtung die mindestens zwei Filter in einem Verbindungskanal angeordnet, der sich durch einen axial verschiebbaren Bolzen erstreckt, wie dies bereits vorstehend beschrieben ist, so bietet es sich an, den Spülkanal derartig zu positionieren, daß die dritte Stellung des Filters durch eine axiale Verschiebung des Bolzens quer zur Strömungsrichtung einstellbar ist.

Vorzugsweise ist dann bei einer Weiterbildung der vorstehend beschriebenen Ausführungsform in der dritten Stellung der Filter die Fluidzufuhr zum Fluidabfuhrkanal unterbrochen, wodurch sichergestellt wird, daß das mit Verschmutzungen besonders stark beladene Fluid nicht in Kontakt mit den mindestens zwei Filtern tritt sondern direkt durch den Spülkanal abgeführt wird.

Vorteilhafte Weiterbildung der erfindungsgemäßen Vorrichtung sind in den Unteransprüchen angegeben.

Die vorstehend und nachfolgend beschriebene erfindungsgemäße Vorrichtung wird insbesondere zum Filtrieren von geschmolzenen Kunststoff verwendet.

Die erfindungsgemäße Vorrichtung wird nachfolgend anhand von drei Ausführungsformen in Verbindung mit den Zeichnungen näher erläutert.

Es zeigen:
- Figur 1A - Figur 1D: eine Schnittansicht einer ersten Ausführungsform der Vorrichtung in unterschiedlichen Betriebsstellungen;
- Figur 2A - Figur 2D: eine Schnittansicht einer zweiten Ausführungsform der Vorrichtung in unterschiedlichen Betriebsstellungen; und
- Figur 3A - Figur 3D: eine Schnittansicht einer dritten Ausführungsform der Vorrichtung in unterschiedlichen Betriebsstellungen.

In der Zeichnung sind die selben Teile mit den selben Bezugsziffern versehen.

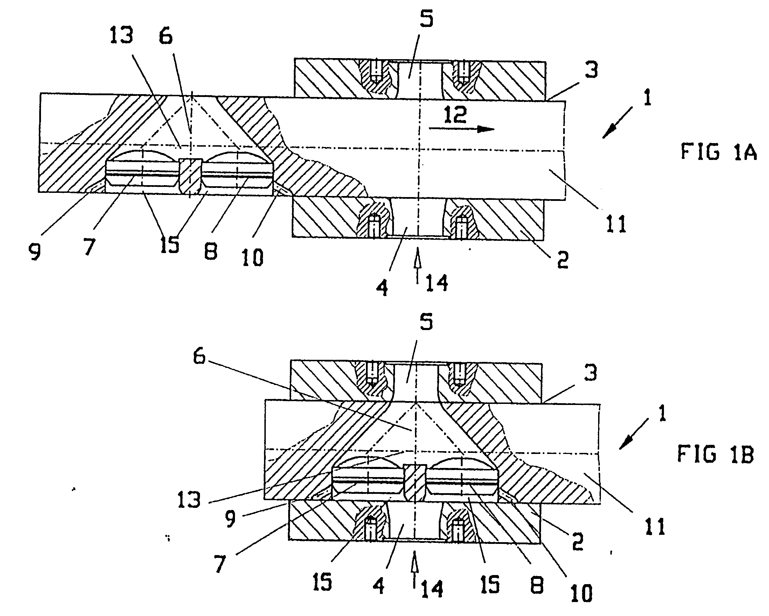

Die in den Figuren 1A bis 1D gezeigte erste Ausführungsform der insgesamt mit 1 bezeichneten Vorrichtung weist ein Gehäuse 2 auf, wobei innerhalb des Gehäuses 2 eine zylindrische Bohrung 3 zur Aufnahme eines zylindrischen Bolzens 11 angeordnet ist. Hierbei ist der Bolzen 11 so auf die Bohrung 3 angepaßt, daß der Bolzen 11 in Pfeilrichtung 12 und umgekehrt hierzu axial verschiebbar ist, ohne daß dabei das Fluid unerwünscht aus der Vorrichtung 1 austritt.

Desweiteren weist das Gehäuse 2 der Vorrichtung 1 einen Fluidzufuhrkanal 4 und einen Fluidabfuhrkanal 5 auf, wobei der Fluidzufuhrkanal 4 mit dem Fluidabfuhrkanal 5 über einen einzigen Verbindungskanal 6 verbunden ist. Im Bereich des Fluidzufuhrkanals 4 weist der Verbindungskanal 6 eine trichterförmige Aufweitung 13 auf, wobei innerhalb der trichterförmigen Aufweitung 13 des Verbindungskanals 6 zwei plattenartige Filter 7 und 8 angeordnet sind. Hierbei erstrecken sich diese plattenartigen Filter 7 und 8 im Wesentlichen quer zu der mit 14 bezeichneten Fluidströmungsrichtung. Stromauf der beiden Filter 7 bzw. 8 und stromab des Fluidzufuhrkanals 4 ist ein Verbindungskanalbereich 15 vorgesehen.

Jeder Verbindungskanalbereich 15 ist über einen dem Verbindungskanalbereich zugeordneten Abflußkanal 9 bzw. 10 mit der Atmosphäre hin verbindbar.

Die in den Figuren 1A - 1D gezeigte Ausführungsform der Vorrichtung 1 arbeitet wie folgt:

Zum Einsetzen oder Austauschen der Filter 7 und 8 wird der Bolzen 11 durch ein axiales Verschieben entgegengesetzt zur Pfeilrichtung 12 aus der in Figur 1B gezeigten Position in eine Lage gebracht, wie diese in Figur 1A abgebildet ist. In dieser Position des Bolzens 11 sind somit die Filter 7 und 8 von außen her frei zugänglich, so daß dementsprechend auch die Filter ausgetauscht werden können.

Von der in Figur 1A gezeigten Stellung werden dann die Filter 7 und 8 durch eine axiale Verschiebung des Bolzens 11 in Pfeilrichtung 12 in eine Position gebracht, wie diese in Figur 1B abgebildet ist. In dieser Position, die auch vorstehend als erste Stellung der Filter 7 und 8 bezeichnet wurde, werden beide Filter von dem durch den Fluidzufuhrkanal 4 in Pfeilrichtung 14 zugeführten Fluid durchströmt, so daß dieses Fluid dann nach Verlassen des Verbindungskanals 6 als filtriertes Fluid über den Fluidabfuhrkanal 5 abgeführt wird.

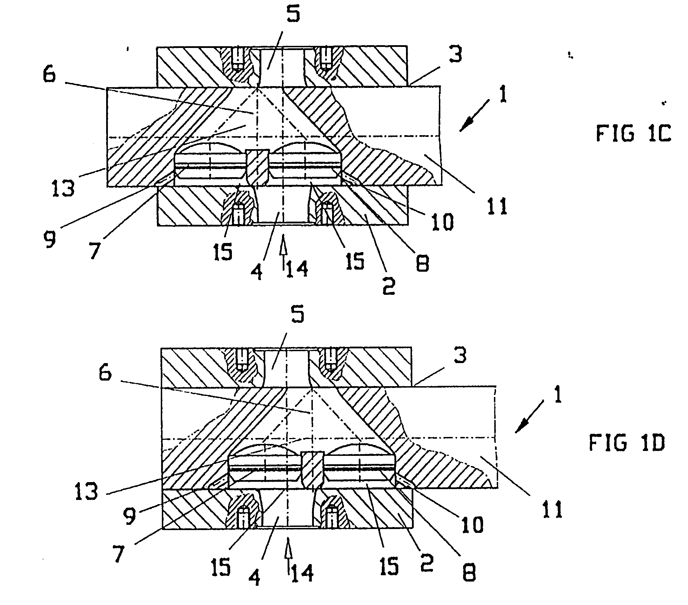

Stellt sich nach Ablauf einer gewissen Betriebszeit heraus, daß beispielsweise das Filter 7 verschmutzt ist, so wird der Bolzen 11 entgegengesetzt zur Pfeilrichtung 12 aus der in Figur 1B gezeigten Stellung in eine Stellung überführt, wie sie in Figur 1C abgebildet ist. Diese Stellung ist vorstehend auch als zweite Stellung bezeichnet worden.

In dieser zweiten Stellung (Regenerierstellung), wie diese in Figur 1C für das Filter 7 und in der Figur 1D für das Filter 8 abgebildet ist, wird das Fluid über den Fluidzufuhrkanal 4 in Pfeilrichtung 14 zugeführt, durchströmt dann das Filter 8 und liegt stromab des Filters 8 dann im Verbindungskanal 6 als filtriertes Fluid vor. Bedingt dadurch, daß das stromab des Fluidabfuhrkanals 5 vorgesehene Werkzeug oder dort angeordnete Düse einen Gegendruck aufbaut und desweiteren nicht die gesamte Fläche der Austrittsöffnung des Verbindungskanals mit dem Fluidabfuhrkanal fluchtet, wird nur ein Teilstrom des filtrierten Fluids über den Fluidabfuhrkanal 5 herausgeführt, während ein weiterer Teilstrom entgegengesetzt zur Strömungsrichtung 14 das Filter 7 durchströmt. Nach Durchströmen des Filters 7 wird das mit von der Filterfläche des Filters 7 abgelösten Teilchen beladene Fluid über den Abflußkanal 9 zur Atmosphäre hin abgeführt, wie dies in Figur 1C zu erkennen ist.

Nach Regenerierung des Filters 7 wird der Bolzen 11 in Pfeilrichtung 12 axial verschoben, so daß dann wieder beide Filter zum Filtrieren zur Verfügung stehen, wie dies in Figur 1B abgebildet ist.

Die Regenerierung des Filters 8 erfolgt in analoger Weise, wie dies vorstehend für das Filter 7 beschrieben ist. Hierbei wird jedoch der Bolzen 11 axial in Pfeilrichtung 12 in eine Position verschoben, wie diese in Figur 1D dargestellt ist. Das über den Fluidzufuhrkanal 4 in Pfeilrichtung 14 einströmende Fluid wird bei der in Figur 1D gezeigten Regenerier- oder Rückspülstellung zunächst über das Filter 7 filtriert, wobei ein erster Teilstrom des filtrierten Fluids über den Fluidabfuhrkanal aus der Vorrichtung 1 gefördert wird. Bedingt durch den Gegendruck strömt ein zweiter Teilstrom des filtrierten Fluids entgegengesetzt zur Strömungsrichtung 14 des Fluids beim Filtrieren und durchströmt das Filter 8, wodurch dementsprechend dieses Filter von anhaftenden Partikeln befreit wird, so daß ein mit diesen Verschmutzungen beladenes Fluid hiernach über den Abflußkanal 10 aus dem Verbindungskanalbereich 15 zur Atmosphäre hin abgeführt wird. Nach Beendigung der Rückspülung des Filters 8 wird der Bolzen 11 entgegengesetzt zur Pfeilrichtung 12 axial in eine Position verschoben, wie diese in der Figur 1B gezeigt ist, wobei in dieser Position, die vorstehend auch als erste Stellung bezeichnet worden ist, beide Filter das in den Fluidzufuhrkanal 4 in Pfeilrichtung 14 einströmende Fluid filtrieren.

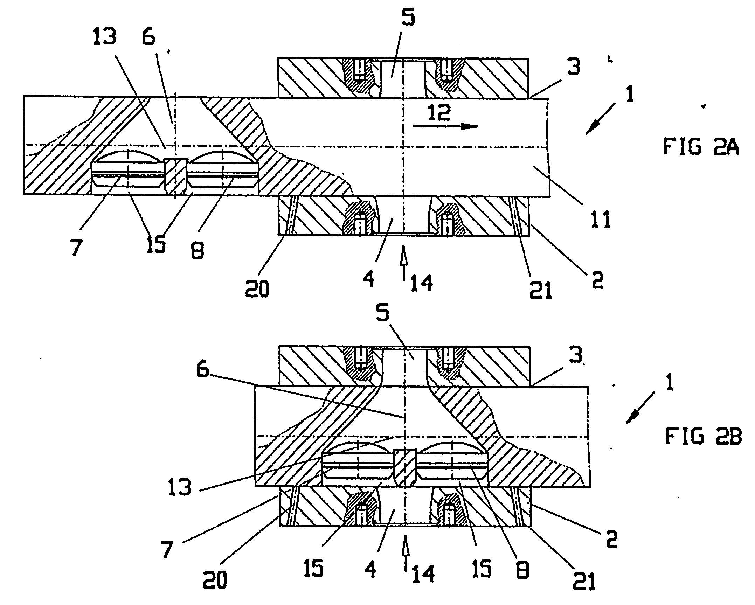

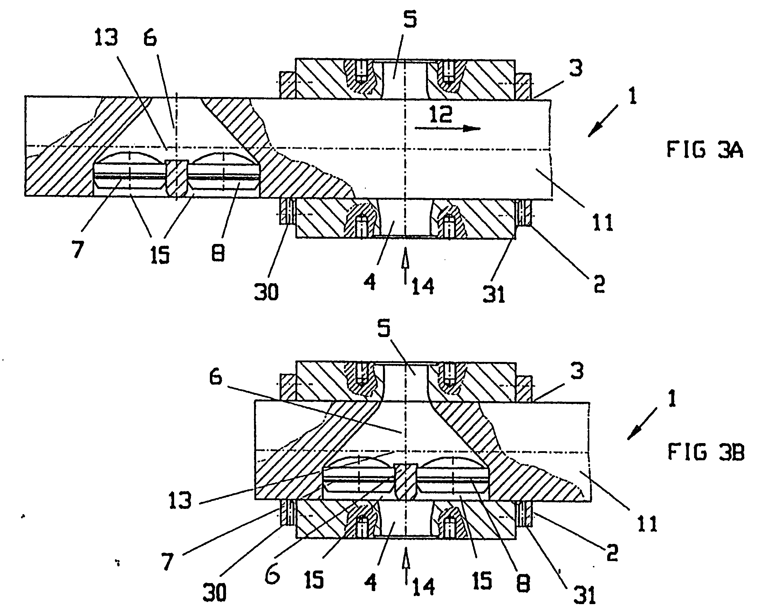

Die in den Figuren 2A bis 2D sowie 3A bis 3D gezeigte zweite und dritte Ausführungsform der Vorrichtung 1 unterscheidet sich von der vorstehend beschriebenen ersten Ausführungsform (Figuren 1A - 1D) lediglich durch die Ausgestaltung und Anordnung der Abflußkanäle 20 und 21 (Figuren 2A - 2D) bzw. 30 und 31 (Figuren 3A - 3D).

Die in den Figuren 2A - 2D und den Figuren 3A - 3D beschriebene zweite und dritte Ausführungsform der Vorrichtung 1 arbeitet exakt so, wie dies vorstehend in Verbindung mit den Figuren 1A - 1D für die erste Ausführungsform der Vorrichtung 1 beschrieben ist. So bilden die Figuren 2A und 3A eine Betriebsstellung der Vorrichtung 1 ab, in der die Filter 7 und 8 frei zugänglich sind, so daß die Filter dementsprechend ausgewechselt werden können.

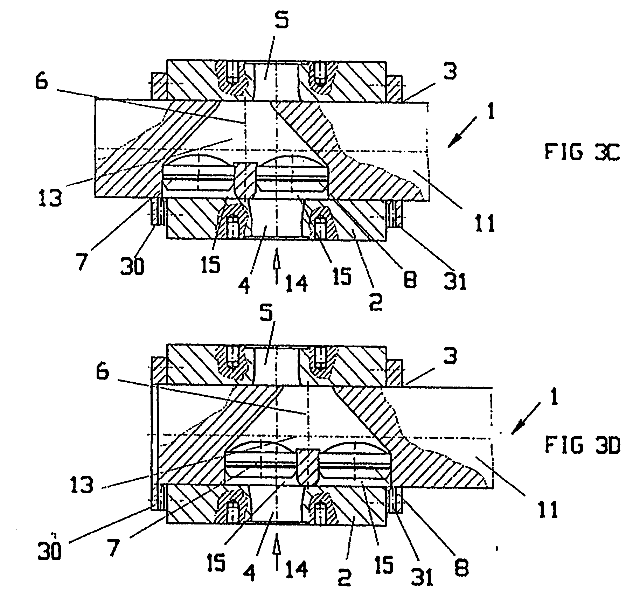

Die Figuren 2B und 3B geben eine Betriebsstellung wieder, in der beide Filter 7 und 8 das in Pfeilrichtung 14 strömende Fluid filtrieren, während die Figuren 2C und 3C eine Betriebsweise zeigen, in der jeweils das Filter 7 regeneriert bzw. rückgespült wird, derart, daß ein Teilstrom des bereits über das Filter 8 filtrierten Fluids das Filter 7 durchströmt und hierdurch Schmutzpartikel von der Filterfläche abgelöst werden, wobei das dann mit Schmutzpartikeln beladene Fluid über den Bereich 15 aus der Vorrichtung 1 durch den Abflußkanal 20 bzw. den Abflußkanal 30 zur Atmosphäre hin abgeführt wird.

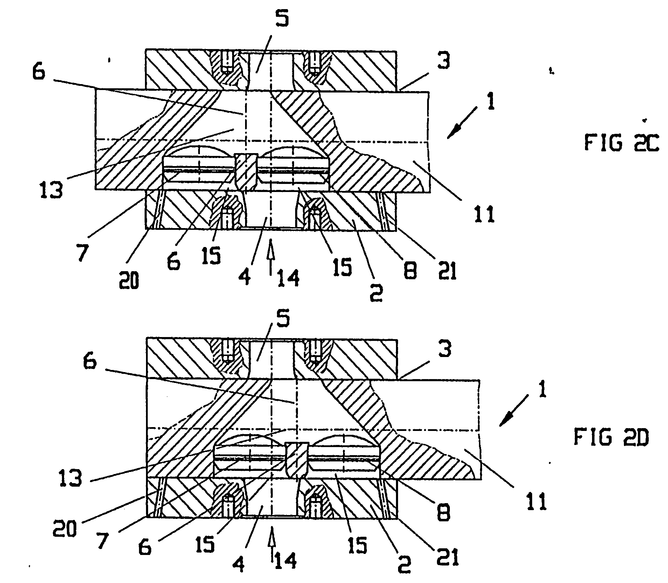

Die Figur 2D und 3D gibt eine Betriebsstellung wieder, in der das Filter 8 regeneriert bzw. rückgespült wird, wobei zu diesem Zweck ein Teilstrom des über das Filter 7 filtrierte Fluids das Filter 8 entgegengesetzt zur Strömungsrichtung beim Filtrieren (Pfeilrichtung 14) durchströmt und hierdurch die Schmutzpartikel vom Filter 8 abgelöst werden, so daß danach das mit diesen Schmutzpartikeln beladene Fluid über den Ablaßkanal 21 bzw. 31 zur Atmosphäre hin abgeführt wird.

Die in den Figuren 2A - 2D gezeigten Abflußkanäle 21 bzw. 22 sind innerhalb des Gehäusebereiches 2 angeordnet, während die in den Figuren 3A - 3D gezeigten Abflußkanäle 30 bzw. 31 außen am Gehäusebereich 2 positioniert sind.

## Patentansprüche

1. Vorrichtung (1) zum Filtrieren eines Fluids, insbesondere eines verflüssigten Kunststoffes, mit einem Fluidzufuhrkanal (4) und einem Fluidabfuhrkanal (5), wobei im Strömungsweg des zu filtrierenden Fluids und quer zu dessen Strömungsrichtung zwischen dem Fluidzufuhrkanal (4) und dem Fluidabfuhrkanal (5) mindestens zwei plattenartige Filter (7, 8) angeordnet sind, die bewegbar gelagert sind, dadurch gekennzeichnet, daß der Fluidzufuhrkanal (4) mit dem Fluidabfuhrkanal (5) über einen einzigen Verbindungskanal (6) verbunden ist, daß der einzige Verbindungskanal (6) eine trichterförmige Ausweitung (13) zur Aufnahme der mindestens zwei Filter (7, 8) aufweist und daß die mindestens zwei Filter (7, 8) gleichzeitig zwischen einer ersten Stellung, in der die mindestens zwei Filter (7, 8) das Fluid filtrieren, und einer zweiten Stellung, in der mindestens ein Filter (7; 8) der mindestens zwei Filter (7, 8) entgegengesetzt zur Strömungsrichtung (14) des Fluids beim Filtrieren durchströmt wird, während das andere Filter (7; 8) bzw. die anderen Filter das Fluid filtriert bzw. filtrieren, bewegbar sind, wobei in der zweiten Stellung der mindestens zwei Filter (7, 8) Fluid aus der Vorrichtung zur Atmosphäre hin abführbar ist.

2. Vorrichtung nach Anspruch 1, dadurch gekennzeichnet, daß in dem einzigen Verbindungskanal (6) zwei Filter (7, 8) angeordnet sind.

3. Vorrichtung nach Anspruch 1 oder 2, dadurch gekennzeichnet, daß der Verbindungskanal (6) derart angeordnet ist, daß der größere Durchmesser der trichterförmigen Ausweitung (13) des Verbindungskanals (6) zum Fluidzufuhrkanal (4) hin weist.

4. Vorrichtung nach einem der vorangehenden Ansprüche, dadurch gekennzeichnet, daß die mindestens zwei Filter (7, 8) quer zur Strömungsrichtung (4) des zu filtrierenden Fluids verschiebbar gelagert sind.

5. Vorrichtung nach Anspruch 4, dadurch gekennzeichnet, daß der Verbindungskanal (6) in einem zylindrischen Bolzen (11) angeordnet ist, wobei der Bolzen (11) fluiddicht in einer Gehäusebohrung, die sich senkrecht zur Strömungsrichtung (14) des Fluids zwischen dem Fluidzufuhrkanal (4) und dem Fluidabfuhrkanal (5) erstreckt, gehaltert ist, daß sich der Verbindungskanal (6) über den gesamten Durchmesser des Bolzens (11) erstreckt und daß der Bolzen (11) quer zur Strömungsrichtung (14) des zu filtrierenden Fluid verschiebbar ist, derart, daß die mindestens zwei Filter (7, 8) durch eine Verschiebung des Bolzens (11) von der ersten in die zweite Stellung und umgekehrt hierzu bringbar sind.

6. Vorrichtung nach einem der vorangehenden Ansprüche, dadurch gekennzeichnet, daß mindestens ein Abflußkanal (9, 10; 20; 21; 30, 31) ) zur Abführung des Fluids aus der Vorrichtung (1) vorgesehen ist, wobei der mindestens eine Abflußkanal (9, 10; 20, 21; 20, 31)) einen stromauf des mindestens einen Filters vorgesehenen Bereich (15) des Verbindungskanals (6) mit der Atmosphäre hin verbindet.

7. Vorrichtung nach Anspruch 6, dadurch gekennzeichnet, daß jedem Filter (7, 8) ein Abflußkanal (9, 10; 20, 21; 30, 31) zugeordnet ist.

8. Vorrichtung nach Anspruch 6 oder 7, dadurch gekennzeichnet, daß der Abflußkanal (9, 10) im Bolzen (11) angeordnet ist.

9. Vorrichtung nach Anspruch 6 oder 7, dadurch gekennzeichnet, daß der Abflußkanal (20, 21; 30, 31)) einem Gehäusebereich (2) der Vorrichtung (1) zugeordnet ist, wobei in diesem Gehäusebereich (2) der Fluidzufuhrkanal (4) angeordnet ist.

10. Vorrichtung nach Anspruch 9, dadurch gekennzeichnet, daß der Abflußkanal (20, 21) innerhalb des Gehäusebereiches (2) angeordnet ist.

11. Vorrichtung nach Anspruch 9, dadurch gekennzeichnet, daß der Abflußkanal (30, 31) außen an dem Gehäusebereich (2) vorgesehen ist, wobei in diesem Gehäusebereich (2) der Fluidzufuhrkanal (4) angeordnet ist.

12. Vorrichtung nach einem der vorangehenden Ansprüche, dadurch gekennzeichnet, daß die mindestens zwei Filter (7, 8) zusätzlich noch in eine dritte Stellung bringbar sind, in der ein stromauf der Filter (7, 8) vorgesehener Bereich (15) des Verbindungskanals (6) mit einem zur Atmosphäre hin offenen Spülkanal verbindbar ist.

13. Vorrichtung nach Anspruch 12, dadurch gekennzeichnet, daß die dritte Stellung des Filters (7, 8) durch eine Verschiebung des Bolzens (11) quer zur Strömungsrichtung (14) einstellbar ist.

14. Vorrichtung nach Anspruch 12 oder 13, dadurch gekennzeichnet, daß die Fluidzufuhr zum Fluidabfuhrkanal (5) in der dritten Stellung der mindestens zwei Filter (7, 8) unterbrochen ist.

## Claims

1. A device (1) for filtering a fluid, particularly a molten plastic, with a fluid-supplying canal (4) and a fluid-draining canal (5), whereby at least two plate-like filters (7; 8) are movably arranged in and across the flow direction of the fluid to be filtered between the fluid-supplying canal (4) and the fluid-draining canal (5), characterised in that said fluid-supplying canal (4) is connected with the fluid-draining canal (5) by only one connecting canal (6), that said connecting canal (6) comprises a funnel-shaped extension (13) taking up the at least two filters (7, 8) and that said at least two filters (7, 8) are simultaneously movable between a first position in which said at least two filters (7, 8) filter said fluid and a second position in which at least one filter (7; 8) of said at least two filters (7, 8) is superfused in the opposite flow direction (14) of the fluid during the filtering process, whereas the other filter (7; 8), respectively the other filters, filters, respectively filter, the fluid, whereby in this second position of the at least two filters (7, 8) the fluid can be drained out of the device into the atmosphere.

2. The device according to claim 1, characterised in that two filters (7, 8) are arranged in the only one connecting canal (6).

3. The device according to claim 1 or 2, characterised in that said connecting canal (6) is arranged in the way that the larger diameter of said funnel-shaped extension (13) of the connecting canal (6) is directed towards the fluid-supplying canal (4).

4. The device according to one of the preceding claims, characterised in that said at least two filters (7, 8) are movably arranged in a position across the flow direction (14) of the fluid to be filtered.

5. The device according to claim 4, characterised in that said connecting canal (6) is arranged in cylindrical bolt (11), whereby the fluid tight bolt (11) is fixed in a housing bore extending vertically to the flow direction (14) of the fluid between the fluid-supplying canal (4) to the fluid-draining canal (5), that said connecting canal (6) extends over the whole diameter of said bolt (11) and that the bolt (11) can be moved across the flow direction (14) of the fluid to be filtered in such a way that the at least two filters (7, 8) can be changed from the first position to the second position and vice-versa by shifting said bolt (11).

6. The device according to one of the preceding claims, characterised in that at least one drain canal (9, 10; 20; 21; 30, 31) is provided for draining the fluid out of the device (1), whereby the at least one drain canal (9, 10; 20; 21; 30, 31) connects a connecting canal section (15) being located upstream of the at least one filter with the atmosphere.

7. The device according to claim 6, characterised in that each filter (7, 8) comprises a drain canal (9, 10; 20; 21; 30, 31).

8. The device according to claim 6 or 7, characterised in that the drain canal (9, 10) is arranged in said bolt (11).

9. The device according to claim 6 or 7, characterised in that a housing section (2) of the device (1) comprises said drain canal (20, 21; 30, 31), whereby the fluid-supplying canal (4) is arranged in this housing section (2).

10. The device according to claim 9, characterised in that said drain canal (20, 21) is arranged within said housing section (2).

11. The device according to claim 9, characterised in that said drain canal (30, 31) is located at the outside of said housing section (2), whereby the fluid-supplying canal (4) is arranged in this housing section (2):

12. The device according to one of the preceding claims, characterised in that the at least two filters (7, 8) can be brought additionally into a third position in which the connecting canal section (15) located upstream of the filters (7, 8) can be connected with a sluice being open to the atmosphere.

13. The device according to claim 12, characterised in that the filter (7, 8) can be brought into the third position by shifting the bolt (11) across the flow direction (14)

14. The device according to claim 12 or 13, characterised in that the supply of the fluid into the fluid-draining canal (5) is interrupted in the third position of the at least two filters (7, 8).

## Revendications

1. Dispositif (1) pour la filtration d'un fluide, en particulier d'une matière plastique liquéfiée, comportant un canal (4) d'amenée de fluide et un canal (5) de décharge de fluide, et au moins deux filtres (7, 8) sont disposés dans le parcours d'écoulement du fluide à filtrer, transversalement par rapport à sa direction d'écoulement et entre le canal (4) d'amenée de fluide et le canal (5) de décharge de fluide, lesquels filtres sont montés de manière à pouvoir se déplacer, caractérisé en ce que le canal (4) d'amenée de fluide est relié au canal (5) de décharge de fluide par un unique canal de liaison (6), en ce que le canal de liaison (6) présente un évasement (13) en forme d'entonnoir pour la réception des deux filtres (7, 8) au moins présents et en ce que les deux filtres (7, 8) au moins présents peuvent être déplacés en même temps entre une première position dans laquelle les deux filtres (7, 8) au moins présents filtrent le fluide, et une deuxième position dans laquelle au moins un filtre (7; 8) des deux filtres (7, 8) au moins présents est traversé dans une direction opposée à la direction (14) d'écoulement pendant la filtration du fluide, tandis que l'autre ou les autres filtres (7; 8) filtrent le fluide, et dans la deuxième position lorsque les deux filtres (7, 8) au moins présents sont dans la deuxième position, le fluide peut être déchargé hors du dispositif, dans l'atmosphère.

2. Dispositif selon la revendication 1, caractérisé en ce que deux filtres (7, 8) sont disposés dans l'unique canal de liaison (6).

3. Dispositif selon les revendications 1 ou 2, caractérisé en ce que le canal de liaison (6) est disposé de telle sorte que le plus grand diamètre de l'évasement (13) en forme d'entonnoir du canal de liaison (6) est tourné vers le canal (4) d'amenée de fluide.

4. Dispositif selon l'une des revendications précédentes, caractérisé en ce que les deux filtres (7, 8) au moins présents sont montés à coulissement transversal par rapport à la direction (14) d'écoulement du fluide à filtrer.

5. Dispositif selon la revendication 4, caractérisé en ce que le canal de liaison (6) est disposé dans un boulon cylindrique (11) qui est maintenu de manière étanche au fluide dans un alésage de boîtier qui s'étend entre le canal (4) d'amenée de fluide et le canal (5) de décharge de fluide, perpendiculairement à la direction (14) d'écoulement du fluide, en ce que le canal de liaison (6) s'étend sur tout le diamètre du boulon (11) et en ce que le boulon (11) peut coulisser transversalement par rapport à la direction (14) d'écoulement du fluide à filtrer, de telle sorte que les deux filtres (7, 8) au moins présents peuvent être amenés de la première à la deuxième position et inversement, par coulissement du boulon (11).

6. Dispositif selon l'une des revendications précédentes, caractérisé en ce qu'au moins un canal d'évacuation (9, 10; 20, 21; 30, 31) est prévu pour évacuer le fluide hors du dispositif (1), et le canal d'évacuation (9, 10; 20, 21; 30, 31) relie à l'atmosphère une zone (15) du canal de liaison (6) située en amont du filtre au moins présent.

7. Dispositif selon la revendication 6, caractérisé en ce qu'à chaque filtre (7, 8) est conjugué un canal d'évacuation (9, 10; 20; 21; 30, 31).

8. Dispositif selon les revendications 6 ou 7, caractérisé en ce que le canal d'évacuation (9, 10) est disposé dans le boulon (11).

9. Dispositif selon les revendications 6 ou 7, caractérisé en ce que le canal d'évacuation (20, 21; 30, 31) est conjugué à une zone de boîtier (2) du dispositif (1), le canal (4) d'amenée de fluide étant disposé dans cette zone de boîtier (2).

10. Dispositif selon la revendication 9, caractérisé en ce que le canal d'évacuation (20, 21) est disposé à l'intérieur de la zone de boîtier (2).

11. Dispositif selon la revendication 9, caractérisé en ce que le canal d'évacuation (30, 31) est disposé à l'extérieur de la zone de boîtier (2), le canal (4) d'amenée de fluide étant disposé dans cette zone de boîtier (2).

12. Dispositif selon l'une des revendications précédentes, caractérisé en ce que les deux filtres (7, 8) au moins présents peuvent encore être amenés dans une troisième position dans laquelle une zone (15) du canal de liaison (6) prévue en amont des filtres (7, 8) peut être reliée à un canal de rinçage ouvert sur l'atmosphère.

13. Dispositif selon la revendication 12, caractérisé en ce que la troisième position les filtres (7, 8) peuvent être amenés dans la troisième position par coulissement transversal du boulon (11) par rapport à la direction d'écoulement (14).

14. Dispositif selon les revendications 12 ou 13, caractérisé en ce que l'amenée de fluide au canal de décharge de fluide (5) est interrompue lorsque les deux filtres (7, 8) au moins présents sont dans la troisième position.
